**Europäisches Patentamt**

**European Patent Office**

**Office européen des brevets**

(19)

(11) Publication number: **0 132 150**

**B1**

(12) **EUROPEAN PATENT SPECIFICATION**

(45) Date of publication of patent specification: 28.10.87

(21) Application number: 84304871.1

(22) Date of filing: 17.07.84

(51) Int. Cl.⁴: **B 65 G 47/52,** B 65 G 47/91, B 65 G 15/58

ERRATUM

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | LAUTET BERICHTIGT:<br>SHOULD READ :<br>DEVRAIT ETRE LU : |
|---|---|---|---|
| 5" (17 cm) | 4 | 27 | 5" (12.7 cm) |
| ($dm^3$ per minute) | 4 | 29 | ($m^3$ per minute) |

| Tag der Entscheidung<br>über die Berichtigung )<br>Date of decision on )  15.03.88<br>rectification: )<br>Date de décision portant )<br>sur modification: ) | Ausgabe- und Ver-<br>öffentlichungstag: )<br>Issue and publication )  11.05.88<br>date: )<br>Date d'edition et de )<br>publication: ) | Patbl.Nr.)<br><br>88/19<br>EPB no:)<br><br>Bull. no:) |
|---|---|---|

Europäisches Patentamt

(19) European Patent Office    (11) Publication number: **0 132 150**
Office européen des brevets                                    **B1**

(12)    **EUROPEAN PATENT SPECIFICATION**

(45) Date of publication of patent specification: **28.10.87**    (51) Int. Cl.⁴: **B 65 G 47/52,** B 65 G 47/91,
                                                                              **B 65 G 15/58**
(21) Application number: **84304871.1**

(22) Date of filing: **17.07.84**

(54) **Vacuum transfer conveyor.**

(30) Priority: **18.07.83 US 514590**
**17.10.83 US 543271**
**27.02.84 US 583964**
**26.03.84 US 593267**

(43) Date of publication of application:
**23.01.85 Bulletin 85/04**

(45) Publication of the grant of the patent:
**28.10.87 Bulletin 87/44**

(84) Designated Contracting States:
**BE DE FR GB IT NL**

(56) References cited:
**GB-A-2 028 247**
**US-A-4 146 467**

(73) Proprietor: **PRECISION METAL FABRICATORS,
INC.
6105 West 55th Avenue
Arvada Colorado 80002 (US)**

(72) Inventor: **Lenhart, Ronald A.
Van Gordon Street
Lakewood Colorado, 80215 (US)**

(74) Representative: **Knott, Stephen Gilbert et al
MATHISEN, MACARA & CO. The Coach House
6-8 Swakeleys Road
Ickenham Uxbridge Middlesex UB10 8BZ (GB)**

Courier Press, Leamington Spa, England.

## 0 132 150

**Description**

This invention relates to a vacuum transfer conveyor apparatus for transferring only those flat-ended articles having a predetermined, desired orientation from a first station to a second station spaced from the first station, the apparatus comprising: a foraminous transfer belt having a reach extending from the first station to a second station and movable for transferring those articles that are flat end uppermost from the first station to the second station, the transfer belt having an outer pick-up surface spaced above the first station a distance just slightly greater than the height of the upright articles; a vacuum plenum having a wall extending along an inner surface of the transfer belt; and means for drawing a vacuum in the plenum.

Such an apparatus is known from US—A—4 146 467.

More and more operations in the manufacture and packaging of goods require a sensitive means of detecting and removing out-of-specification cans, containers, cartons, packages and the like. The items to be removed may not be within certain weight limits, size, position, or shape to pass a particular test. With the rapidity that the modern machines have to run to satisfy production requirements, the usual visual methods of screening is not satisfactory.

In the past, vacuum devices have been used to automatically detect and reject downed (fallen) cans. With devices of this type, a vacuum is applied to the open upper end of upright cans to hold the cans against a moving conveyor, while the downed cans will not be held against the vacuum mechanism and are rejected to a collection station.

The device disclosed in U.S.—A—4,146,467 has a pair of endless belt conveyors which are spaced apart longitudinally to convey cans in an upright position. The upright cans are transferred from one conveyor to the other by a vacuum transfer mechanism which is located above the adjacent ends of the conveyors. The transfer mechanism includes an endless perforated belt that travels across the open bottom of a plenum housing which is divided into a series of chambers. The chambers are subjected to a vacuum which acts to attract and hold the upright cans against the perforated belt so that the cans can be transferred by movement of the belt from one conveyor to the other, while downed cans are rejected from the conveyor system. A central chamber is subjected to a lesser vacuum than the remaining chambers, and as the cans move across this central chamber, cans with damaged upper flanges will fall from the belt to a collection site wince they do not have a sufficient effective contact are to be supported by the lesser vacuum.

Another device is disclosed in U.S.—A—4,136,767, which is directed to the use of a vacuum transfer apparatus to move cans from a feed-in can conveyor in an inverted position to an upper conveyor in upright position by means of a perforated endless can-carrying and can-uprighting conveyor belt which works over the peripheral surface of a rotary foraminous metal cylinder or drum. Vacuum is applied from a vacuum chamber or housing and a first vacuum control device to the perforated endless conveyor belt which lifts the cans off the feed-in can conveyor belt, whereupon the perforated endless conveyor belt grabs and holds the cans with the closed bottoms of the cans disposed against the perforated endless conveyor belt, around approximately half of the peripheral surface or circumference of an air-permeable, rotary, foraminous, metal drum or cylinder. When the cans reach the top of the drum or cylinder, the vacuum from the vacuum chamber or housing, acting through a second and upper vacuum control device and the perforated endless conveyor belt, is cut off and the cans are delivered in upright position to a take-away or delivery conveyor by which the cans may be transported to a second work station.

Although these known devices have been suitable for their intended purposes, they have certain shortcomings which heretofore have not been overcome. In every instance, the size of the openings through the plenum and the transfer belt is quite large so that the volumetric rate of transfer of air through the belt is quite high. At the beginning of a cycle when no cans are on the belt, the openings in the belt are all open so that air is drawn through the belt at a very high rate, whereas the pressure difference between the ambient air and the plenum is relatively low. As cans are picked up by the belt, an increasing number of holes becomes closed by the ends of the cans or containers over the belt. As this occurs, the volumetric rate decreases and the air speed increases as the static pressure within the plenum increases. Since the pressure differential is relatively little at the beginning of the cycle, the rate must be extremely high in order to attract the cans to the belt. Later when a large number of cans are on the belt, the static pressure differential is so great that sometimes can which are tipped over will be drawn up against the belt rather than being separated from the other cans. Also, the greater air speed created by the much higher pressure differential will cause the air flowing through the space between adjacent cans to create a low pressure between the cans in accordance with Bernoulli's Principle. This can be undesirable where one of these cans is defective or improperly oriented. For example, the bottom of conventional aluminum can has a chine or taper at the bottom end so that the closed bottom end has a smaller surface area than the open upper top. Thus, a vacuum transfer device can be adjusted so that only cans in the upright position will be attracted to the belt, whereas if the bottom of the can is up the surface area is too small to be held up by the vacuum and therefore is separated at the transfer station from the other cans. On the other hand, where three cans are together, one of them being inverted, if the volumetric rate is sufficiently great, low pressure will be created in the space between the cans in accordance with the Bernoulli Principle so that the inverted can is carried along with the other two. Thus, effective separation of the cans with the desired orientation from those which are not, is difficult and sometimes almost impossible to obtain.

2

Additional disadvantages with known devices is that the size of the fan must be very great in order to draw air at a sufficient rate through the transfer belt when the system, starts up in order to attract a can to the belt. Thus, the power requirements for the transfer conveyor are excessive.

Additionally, it is often necessary to provide suitable venting devices or pressure regulator devices within the plenum so that the static pressure does not become so great as to collapse the ducting.

Thus, in the known devices, the pressure within the plenum, is constantly changing, depending on the number of cans on the transfer belt, creating wide variations not only in static pressure within the plenum, but also in the volumetric rate of air transfer through the belt, resulting in difficult regulation and control problems.

According to the present invention there is provided a vacuum transfer conveyor apparatus, as known from US—A—4146467, characterized in that a predetermined pattern of openings is defined in the lower wall of the plenum and a predetermined pattern of holes is defined in the pick-up surface of the transfer belt with the matching effective area of openings in the plenum and holes in the belt higher at the first station than over the remaining reach of the belt and such that the vacuum drawing means draws the maximum vacuum in the plenum of which it is capable when all the openings of the plenum are uncovered and which vacuum is just sufficient to pick-up only properly orientated ones of the said articles at the first station.

According to a further aspect, the invention relates to a method of transferring upright flat-ended articles from a first station to a second station spaced from the first station, comprising moving a foraminous transfer belt from a position spaced above the first station a distance slightly greater than the height of the upright articles, to the second station and, with a vacuum plenum drawing a vacuum over the transfer belt, thereby picking-up on to a pick-up surface of the belt, articles from the first station and conveying them to the second station, as known from US—A—4146467, and is characterized in that a predetermined pattern of openings is defined in a lower wall of the vacuum plenum and a predetermined pattern of holes is defined in the transfer belt such that at and adjacent the first station the matching openings of the plenum and holes of the belt define a larger effective area than over the remaining reach of the belt passing over the lower wall of the plenum such that the vacuum drawn is the maximum vacuum which the plenum is capable of producing when all the said openings are uncovered, and which vacuum is just sufficient to pick-up only properly orientated articles at the first station.

In order that the invention may be better understood, various embodiments will now be described, by way of example, with reference to the accompanying schematic drawings, in which:

Figure 1 is an enlarged, fragmentary perspective view, in accordance with the prior art, showing how an improperly aligned container can be held and carried along with two properly aligned containers;

Figure 2 is a fragmentary perspective view, showing a plenum and belt arrangement of a vacuum transfer conveyor in accordance with the invention wherein the plenum has spaced parallel rows of jet openings and the belt is provided with corresponding rows of slots for sequentially exposing and covering the jet openings;

Figure 3 is an enlarged, horizontal section, taken alone line 3—3 of Figure 2, showing further details of the plenum and vacuum belt construction and showing a container being supported by the belt;

Figure 4 is a fragmentary top plan view of a corner portion of the plenum wall of Figure 2 showing the relationship between the jet openings and the belt slots;

Figure 5 is a greatly enlarged, fragmentary top view of the transfer belt showing, in phantom lines, an alternative arrangement for the jet openings and their co-operation with the belt splice to retain a container over the splice;

Figure 6 is a horizontal section, taken along line 6—6 of Figure 5, further showing the positioning of a container under the splice;

Figure 7 is a fragmentary perspective view, similar to Figure 2, but showing a further alternative plenum and belt arrangement wherein the plenum has spaced parallel pick-up and transfer slots and the belt is provided with corresponding rows of jet openings aligned with those slots;

Figure 8 is an enlarged, horizontal section, taken along line 8—8 of Figure 7, showing further details of the plenum and vacuum belt construction and showing a container being supported by the belt;

Figure 9 is a fragmentary, enlarged, top plan view of a portion of the plenum wall of Figure 7 showing the relationship between the jet openings in the belt and the plenum wall slots;

Figure 10 is a horizontal section, taken along line 10—10 of Figure 9, showing how containers are transferred and selectively separated by the transfer belt; and

Figure 11 is a perspective view of a vacuum transfer device according to a further embodiment in which it is used in conjunction with a vertical single filler.

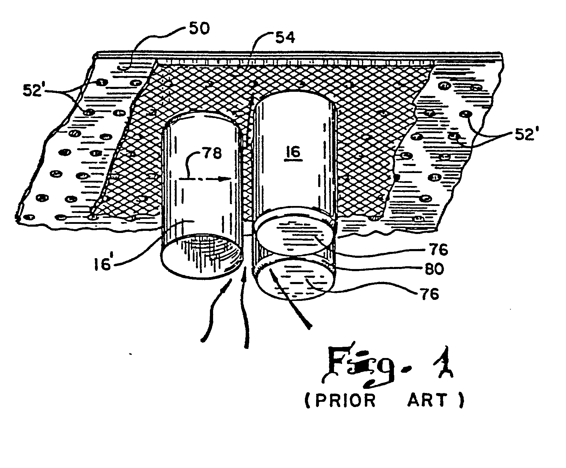

Referring to Figure 1, a common problem with the prior devices having large openings 52' in a bottom wall 50 is that when two cans 16 are in side to side contact and a third inverted can 16' is positioned near the intersection of cans 16 so as generally to form a triangle, the Bernoulli Principle and Coanda Effect will act to create a partial vacuum in the space between the three cans so that can 16' will be drawn toward the other two cans in the direction of arrow 78 and held thereagainst and supported by these cans so as to be carried along by a transfer belt 54. In other words, the vacuum from the plenum together with the supporting force caused by the partial vacuum between the cans will hold can 16' inverted so that it is carried along with cans 16 across the transfer mechanism when, in fact, the can should have been discarded. This occurs when large openings 52' are used so that a high volume of air passes through the holes tending to draw the cans up against the transfer belt in the prior devices. Thus, when the opening to the plenum is substantially unobstructed this mass flow of air will create a partial vacuum in accordance with the Bernoulli Principle and Coanda Effect.

On the other hand, with the embodiments of the invention now to be described, the flow of air is substantially less and therefore a finer sensitivity concerning the support of containers by the transfer belt 54 is obtained so that the chance of carrying an improperly orientated can across the transfer station is minimized.

In one preferred embodiment of the present invention, the belt 54 of the transfer mechanism is run at a substantially higher speed, as much as twice the speed of the belt of an upstream conveyor. This is to provide longitudinal spacing between the containers picked up by the transfer belt 54 to minimize further the difficulties described with respect to Figure 1. Furthermore, if a fallen (downed) container is present, by means of the faster running of belt 54, the longitudinal spacing of containers 16 will allow the downed container to fall free and drop. A discharge conveyor can be run at the same speed as, or a different speed from, the transfer unit. If the outlet conveyor is set to travel at the same speed as the inlet conveyor, the containers will be returned to the same pattern as when they left the upstream conveyor.

Furthermore, since the system always operates at a constant vacuum and at maximum static pressure rather than having to accommodate a wide range of air flow and static pressure as in the prior art, a much smaller blower and motor may be used. This can be exemplified by reference to Table I below in conjunction with the following description. This table is for a fan having a 12.25 inch (31 cm) diameter and a fan outlet area of 0.86 square feet (800 cm$^2$). Static pressure (SP) at the plenum openings is given in inches (and cm) of water. Corresponding fan speeds are given in RPM (revolutions per minute) and fan powers BHP (brake horse power).

TABLE I

| (dm$^3$ per minute) | Volumetric air transfer rate: CFM (cubic feet per minute) | 1/2″ (1.3 cm) SP | | 1.5″ (3.8 cm) SP | | 4″ (10 cm) SP | | 5″ (17 cm) SP | |
|---|---|---|---|---|---|---|---|---|---|
| | | RPM | BHP | RPM | BHP | RPM | BHP | RPM | BHP |
| 34.1 | 1203 | 1652 | 0.19 | 2071 | 0.44 | 2885 | 1.16 | 3175 | 1.51 |
| 36.5 | 1289 | 1735 | 0.22 | 2142 | 0.48 | 2925 | 1.23 | 3206 | 1.58 |
| 38.9 | 1375 | 1821 | 0.25 | 2216 | 0.52 | 2970 | 1.31 | 3237 | 1.65 |
| 43.8 | 1547 | 1989 | 0.32 | 2367 | 0.62 | 3075 | 1.46 | 3327 | 1.84 |
| 48.7 | 1719 | 2164 | 0.41 | 2520 | 0.73 | 3193 | 1.63 | 3430 | 2.03 |
| 53.5 | 1891 | 2342 | 0.51 | 2680 | 0.86 | 3323 | 1.83 | 3545 | 2.24 |
| 58.4 | 2063 | 2520 | 0.62 | 2842 | 1.01 | 3466 | 2.05 | 3680 | 2.49 |
| 63.3 | 2235 | 2701 | 0.76 | 3009 | 1.17 | 3608 | 2.28 | 3814 | 2.75 |
| 68.1 | 2407 | 2885 | 0.91 | 3175 | 1.36 | 3755 | 2.53 | 3959 | 3.03 |

With the known conveyors, if one determined that a particular design required 2407 cubic feet (8.1 dm$^3$) of air (CFM) to operate the system and that a 1/2 inch (1.3 cm) static pressure (SP) was required at the plenum openings, the chart determined that the fan was to be operated at 2885 revolutions per minute (RPM) with all the plenum openings clear, i.e. when none was covered by a can. If the openings were restricted to about one-half, by loading the belt with containers, the air transfer rate would be halved to 1203 (CFM), which with a fan speed of 2885 RPM means that, according to the chart, the static pressure (SP) would have increased from 1/2 inch (1.3 cm) to 4 inches (10 cm), or by a factor of eight.

By way of a second example, if a static pressure of 1.5 inches (3.8 cm) were desired with air flow of 2407 CFM the fan would have had to operate at 3175 RPM. Again, if cans covered approximately half of the holes so that the CFM dropped to 1203, then 5 inches (17 cm) of static pressure would have been drawn in the plenum. The result of this would have been a dramatic increase in the face velocity of the air passing through the vacuum jet openings 52. As a result, misaligned cans would have been carried by the transfer belt across the transfer station defeating the purpose of the machine.

Another way of viewing this same problem and the dramatic differences between the apparatus of the preferred embodiment of the present invention and the prior art is to consider the air transfer rate required to operate the system of the preferred embodiment as compared to that of the prior art. In the system of this embodiment, if a vacuum of 3.5 inches (8.9 cm) of water is drawn in the plenum through 1/8 inch (.32 cm) holes having a spacing of 1/2 inch (1.3 cm) between centres, each hole will draw 0.6723 CFM (0.019 dm$^3$ per minute) at a face velocity of 7,900 feet (2400 m) per minute. This hole spacing provides 576 holes per square foot (0.62 hole per square cm) arranged in parallel rows. If the plenum wall is 19 inches (48 cm) by 14 inches (36 cm), i.e. 1.85 square feet (1720 cm$^2$), it will have a total of 1,131 holes and will drawn 760 CFM (21.5 dm$^3$ per minute). Because of the relatively small size of the holes, even if the belt 50 has only 50% open mesh, virtually all of the holes will be open unless they are covered by a can. If a can is a standard 211/413 12 oz. aluminum can, it weighs 145.2 grams. When the can is in the upright position as shown in Figure 1, the top edge 72 of the can will cover an average of 23.7 holes. By providing a spacing of 3/16 inch (0.48 cm) between the upper edge 72 of the cans and the belt 54, the Bernoulli Principle and Coanda Effect will be effective to at least partially lift the cans from belt of the conveyor to the transfer belt 54.

By comparison, if larger holes and lower static pressure is provided as in the prior art, such as 1/2 inch (1.3 cm) holes at a static pressure of 1/2 inch (1.3 cm water), it can be determined that the face velocity is 2,828 feet (862 m) per minute. This is calculated by multiplying the square root of 1/2 by 4,000 feet (1220 m) per minute, the face velocity of a 1 inch (2.5 cm) hole. With a 50% open mesh belt, it could be assumed that the effective area is half of 1.85 square feet (1720 cm²), i.e. 0.925 square feet (860 cm²). Thus, by multiplying 2,828 feet (862 m) per minute×0.925 square feet (860 cm²) the air flow is 2,616 CFM (74.1 dm³ per minute) as compared to 760 CFM (21.5 cm³ per minute) with the preferred embodiment of the invention. One of the things that this additional flow of air means, is that the Bernoulli Principle and the Coanda Effect will create the situation shown in Figure 1 with respect to three adjacent cans, where one is in an inverted position. Additionally, cans which are lying sideways on the belt can also be picked up due to the high CFM (volumetric rate of flow) generated. Furthermore, because of the chine near the lower end of the can, the bottom diameter of the can is approximately 2 inches (5.1 cm), whereas the top is 2 3/4 inches (7 cm). In this regard, the area of a 2 inch (5.2 cm) diameter can bottom is 3.1416 square inches (25.8 cm²) and the area of a 2 3/4 inch (7 cm) diameter can top is 5.9396 square inches (48.8 cm²), an increase in area of 89 percent. With the preferred embodiment having a hole size as described, the average number of holes holding the top of the can is over 23, compared with 12 holes holding the bottom of the can if an inverted can is in position. In other words, there are almost twice as many active jet openings working on the top of the can as compared to the bottom of the can. On the other hand, in the example given of a prior known conveyor with 1 inch (2.5 cm) holes, the differential number of holes with respect to the top of the can and the bottom of the can is considerably lower.

A preferred construction of a vacuum transfer conveyor is shown in Figures 2 to 4 wherein a plenum 80 is provided having side walls 82 and 84 interconnected by end walls 86 and 88. The plenum also includes a bottom wall 90 which is provided with longitudinal spaced parallel rows of jet openings 92. Somewhat larger jet openings 94 are provided at the upstream end of bottom wall 90 in each row, as will be more fully discussed below. An endless vacuum belt 96 is provided which moves from the upstream end to the downstream end across bottom wall 90 and plenum 80 and has parallel spaced rows of longitudinal apertures in the form of slots 98 which are aligned with jet openings 92 and 94 to sequentially cover and expose them. Conveniently, when a vacuum is drawn on plenum 80, the openings 92 and 94 which are covered by the belt 96 will cause it to be drawn up tightly against the plenum, whereas the openings which are uncovered by virtue of being above the slots will draw a vacuum to lift and support cans to be moved with the reach of belt 96 from the upstream end to the downstream end.

The belt is pulled across plenum wall 90 by a drive roller 100 at the downstream end of the plenum and also runs over an upstream idler roller 102. Conveniently, vacuum belt 96 is provided with a longitudinal rib 104 adjacent each edge which is received in a corresponding groove, such as groove 106 in wall 90, as best seen in Figure 3. Conveniently, drive roller 100 is provided with spaced grooves 108 for receiving ribs 104 to enhance the pulling power of the drive roller. Also, idler roller 102 is provided with grooves 110 also corresponding in spacing to ribs 104. By this arrangement, the belt will be positively guided along the proper path. The rib 104 and groove 106 in plenum wall 90 provide the dual or secondary function of serving as an air seal so that air does not leak in between the sides of the plenum wall and the belt.

By way of example, assuming that the cans to be conveyed are aluminium cans weighing approximately 14 grams and having an upper end diameter of 2 1/2 inches (6.4 cm) and are to be conveyed across a vacuum plenum plate 90 which is 14 1/2 inches (37 cm) wide and 20 inches (50 cm) long. The first four holes 94 in each row will be 13/64 inch (0.52 cm) on 3/8 inch (0.95 cm) centres and the rest of the holes in each row will be 5/64 inch (0.2 cm) holes on 1/2 inch (1.3 cm) centres, the rows of slots being spaced 1 1/4 inches (3.2 cm) apart so as to correspond with the spacing of the holes and travel over the respective rows of holes. By this arrangement, no matter where a container is picked up by the belt, at least one hole will be exposed through a slot to the can and will provide sufficient vacuum for lifting a container if it is under holes 94 and to support a container if it is under one of holes 92.

With the dimensions given, there will be eleven rows of holes and, thus, 44 larger holes 94 and 396 smaller holes 92. If a 4 inch (10 cm water) vacuum is drawn, each larger hole will pass 1.80 CFM (0.05 dm³ per minute) of air, giving a total of 79.2 CFM (2.2 dm³ per minute) for all holes. Similarly, these smaller holes 92 will each draw 0.1627 CFM (.0046 dm³) giving a total of 64.4 CFM (1.8 dm³ per minute). Thus, the total CFM for the entire system with all holes open would be 143.6 CFM (4.1 dm³ per minute). However, because the belt covers the holes, only a maximum of approximately 60% of the holes can be open when the belt is completely empty of cans. Thus, the most air that can be drawn at one time is 60% of 143.6 CFM (4.1 dm³) or 86.16 CFM (2.4 dm³ per minute). Thus, the air usage is very small which in turn makes the power requirements very low. It is contemplated that a one-third horse power (BHP) motor used with a Grainger 2C-820 fan, capable of producing 160 CFM (4.5 dm³ per minute) at 5.0 inches (17 cm) static pressure, is adequate for the operation of this apparatus as previously described.

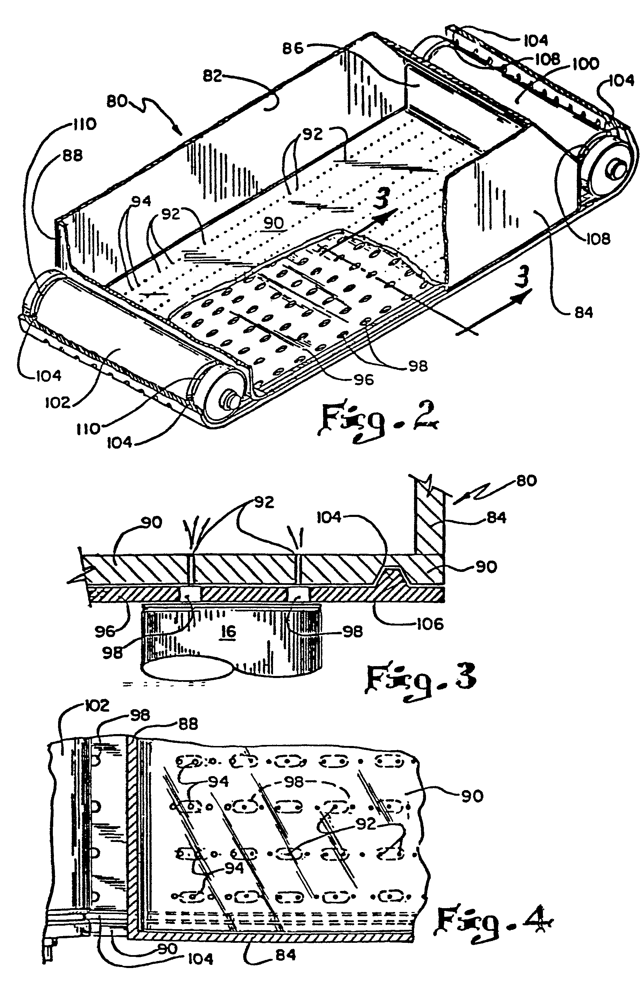

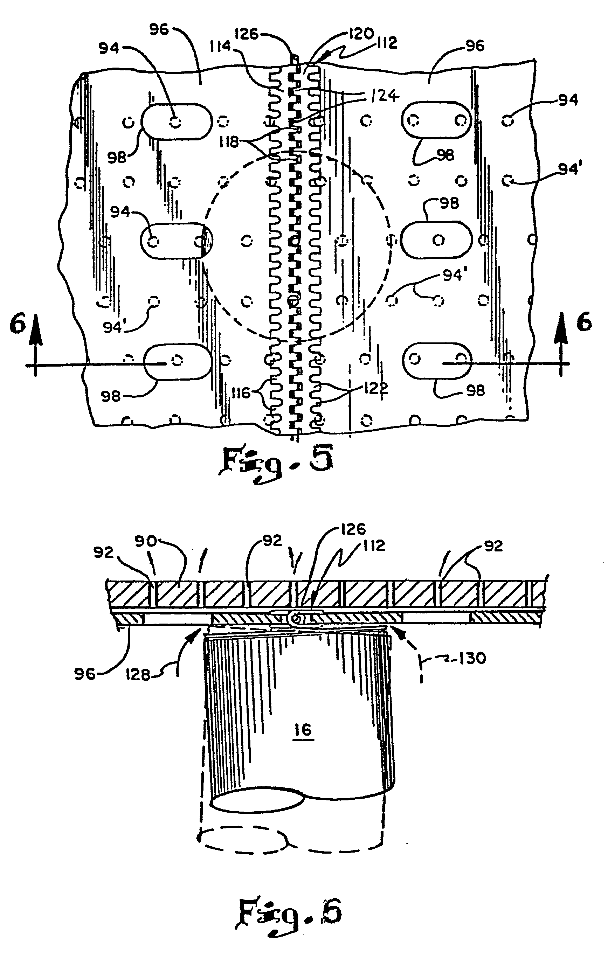

Additional features of this embodiment are shown in Figures 5 and 6 wherein the ends of belt 96 are joined, as by a splice 112 in the form of a piano hinge, to form the endless belt. Splice 112 includes first

5

hinge plate member 114 extending across one end of the belt and attached thereto, as by spaced cleats 116. A plurality of knuckles 118 extend from the opposite side of hinge plate 114. Splice 112 includes a second hinge plate 120 having cleats 122 connected to the other end of belt 96 and also having knuckles 124 extending from the other side which interlace with knuckles 118 and have an opening therethrough for receiving a hinge rod 126. As can clearly be seen in Figure 5, there are air spaces between the knuckles 118 and 124 which will permit extra air to be drawn through the plenum at the location of the hinge as it moves across the surface of the plenum. In other words, any air jet openings 94 which align with the splice will draw air. As shown in Figure 6, a can 16 will not be drawn flush against the belt at splice 112 because the splice is thicker than the belt. Thus, the container will tend to wobble and additional air can be drawn in around the base created between the upper edge of the can and the belt. Thus, if the vacuum is not sufficient, the can will not be retained, but will fall from the belt.

In order to be sure that enough air is drawn through the spaces between knuckles 118 and 124 along splice 112, an additional row of jet openings 94' is provided between each row of holes 94. As previously pointed out, jet openings 94 in each alternate row are staggered. Similarly, jet openings 94' are staggered in the same relationship as the rows containing jet openings 94. The jet openings 94' serve to draw the belt up against the bottom of platen 90 and normally are never exposed to atmosphere. However, when splice 112 passes over them, they will draw air through the openings between knuckles 118 and 124 and therefore will provide additional air flow and vacuum for supporting a container 16 which is positioned over the hinge in addition to the air provided through the opening or openings 94 that are exposed through one of slots 98. Thus, the openings in the hinge actually provide means for drawing additional air through additional openings to assure that the container 16 is carried along with the belt even though it is positioned under the hinge and can tilt back and forth as illustrated in Figure 6. Also, additional air can be drawn in and around the lip of the can bringing into effect Bernoulli's Principle which will cause the can to tend to be drawn up against the belt. The air may follow the path indicated by either arrow 128 or 130, depending upon the tilt of the container.

It will be understood that although the apertures in the transfer belt in the embodiments of Figures 2—6 have been illustrated and described as slots, they may be of any conveniently and suitable shape, such as circular.

An alternative embodiment is shown in Figures 7 to 10 wherein a plenum 132 has spaced side walls 134 and 136 interconnected by end walls 138 and 140. A bottom wall 142 is provided which has spaced parallel transfer slots 144 extending from one end thereof to the other, as best seen in Figures 7 and 9. Spaced between, or interleaved with, each pair of transfer slots 144 are pick-up slots 146 which are adjacent the upstream end of wall 140. Conveniently, a vacuum transfer belt 148, having parallel spaced rows of jet openings 150, extends across bottom wall 142 between a drive roller 152 and an idler roller 154. The rows of jet openings 150 are spaced so that one coincides with each transfer slot 144 and each pick-up slot 146.

One advantage of this arrangement is that the jet openings on the vacuum belt can be spaced closely together so that rather small articles 156, such as bottle cans, can be conveyed by this system. It is important that during the transfer operation at least one jet opening be available to each article being conveyed so as to hold it against the surface of belt 148. At the upstream end, the pick-up slots 146 effectively double the air flow thereby increasing the flow of air so that the Bernoulli Principle and Coanda Effect will be effective to at least partially lift the articles from the upstream belt.

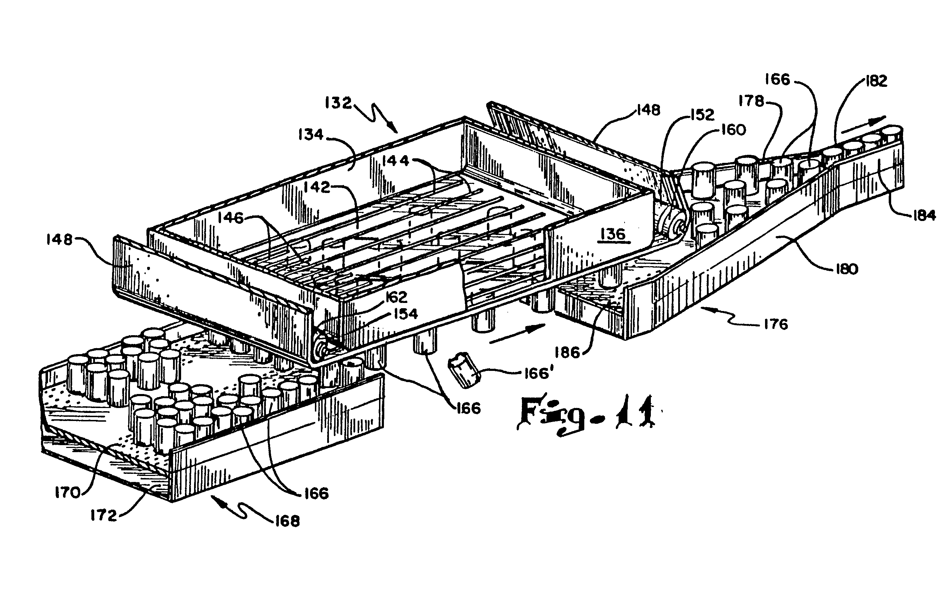

As will be apparent, at the upstream end of belt 148, 100% of the openings will be exposed since there is either a transfer slot 144 or a pick-up slot 146 over every row of openings. However, beyond the downstream ends of pick-up slots 146, the number of openings will decrease by 50% which is sufficient to hold articles which are properly formed. However, any malformed articles will drop off the belt, as best seen in Figure 10. Thus, this vacuum transfer device can be used to transport rather small light-weight articles, where any malformed articles can be eliminated. Also, if the belt speed is increased above that of the upstream belt, the articles can be separated longitudinally to reduce any bridging effect wherein the malformed article would be carried by two adjacent articles, as previously discussed with respect to Figure 1.

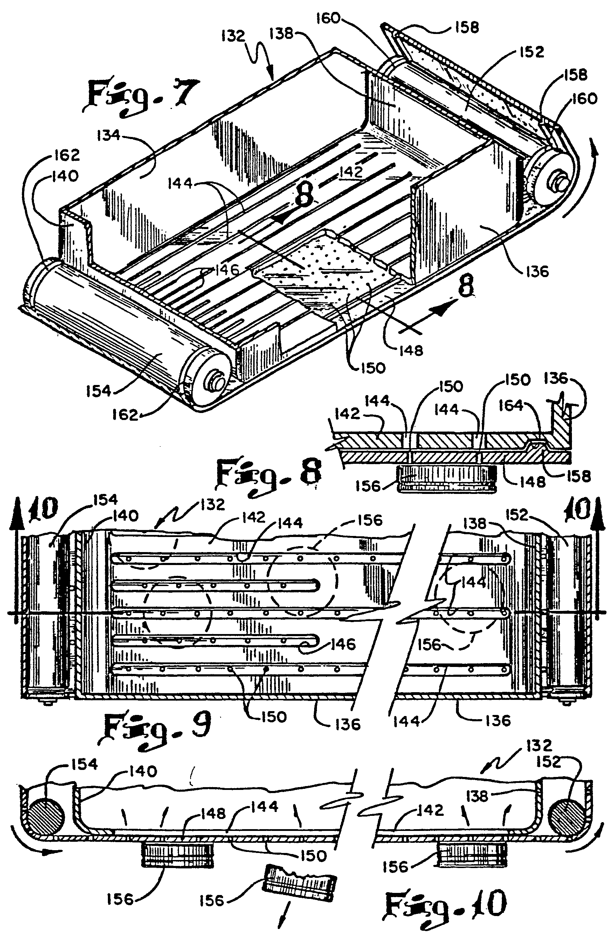

As in the embodiment of Figures 2 to 5, belt 148 can be provided with ribs 158 adjacent each edge which are received in grooves 160 adjacent each end of drive roller 152 and grooves 162 adjacent each end of idler roller 154 as well as grooves 164 in plenum wall 142, best seen in Figure 8. This provides a tight air seal so that air is pulled into the plenum only through jet openings 150.

As an alternative to the embodiment of Figures 7 to 10, the bottom of the plenum can be omitted entirely so long as suitable means are provided for creating an effective seal between the edges of the transfer belt and the plenum to maintain the relatively high subambient static pressure required for the operation of this conveyor. Additionally, bottom wall 50 can be provided with a large opening for receiving a removable plate having vacuum jets therein. This will facilitate providing different size and spacing of jet openings for different size and weight containers.

An alternative embodiment is shown in Figure 11 wherein the vacuum transfer device of Figures 7 to 9 is utilized in connection with other apparatus, as described below, for transferring a mass of cans from an upstream location to a downstream location wherein they are arranged in single file. It will be understood that the vacuum transfer devices of the other embodiments could also be utilized for this purpose, the embodiment shown being for illustrative purposes only.

6

# 0 132 150

Containers 166 can be supplied en masse at an upstream location, as by means of an air table 168 of the type having a jet board 170 through which air is applied by means of a plenum 172 to convey the containers in a large mass to transfer conveyor 132. The containers 166 will be carried by the transfer belt 148 to a downstream conveyor 176. Conveniently, transfer belt 148 operates at sufficient speed to provide longitudinal separation of the containers as shown. Also, any containers which are bent or misshapen, such as container 166', will be dropped from the transfer belt, as previously described with respect to the other embodiments. Advantageously, downstream conveyor 176 has converging sidewalls 178 and 180 which cause the longitudinally separated containers 166 to be moved towards each other so as to be brought into single file between parallel walls 182 and 184. Conveyor 176 has also been illustrated as an air table having a jet board 186, but other types of conveying apparatus could be used.

Because of the longitudinal separation of the containers by vacuum transfer belt 148, the angle of sidewalls 178 and 180 can be much sharper than other single file conveying devices. Thus, the total length of the single filing apparatus which includes the vacuum transfer portion can be significantly shorter. Of course, the angle of sidewalls 178 and 180 will be designed so as to bring the containers into an isosceles triangular configuration so that they will advance smoothly and can be accelerated into single file arrangement.

Although the transfer belt has been illustrated as transferring containers along a horizontal path from a first station to a second station, it will be understood that the principles of this invention can be applied to the transporting of the cans along an incline, such as in an elevator or around a curved surface, such as a plenum in the form of a drum. A very low volume rate of air transfer is then required for supporting the containers and thus the power requirements are very low.

In some uses of the present invention it will be desirable to transfer cans which are in an inverted rather than upright position, such as cans being transferred from a washing station to a drying station. In that situation, should one of the cans be upright, it will undoubtedly contain some amount of water which will cause it to be too heavy to be held by the belt and thus will be separated from the inverted cans even though the larger end of the can will be adjacent the transfer belt.

## Claims

1. A vacuum transfer conveyor apparatus for transferring only those flat-ended articles (16) having a predetermined, desired orientation from a first station (168) to a second station (176) spaced from the first station, the apparatus comprising: a foraminous transfer belt (90, 148) having a reach extending from the first station (168) to a second station (176) and movable for transferring those articles that are flat end uppermost from the first station to the second station, the transfer belt having an outer pick-up surface spaced above the first station (168) a distance just slightly greater than the height of the upright articles (16, 166); a vacuum plenum (80, 132) having a wall extending along an inner surface of the transfer belt (90, 148); and means for drawing a vacuum in the plenum characterized in that a predetermined pattern of openings (92, 94; 144, 146) is defined in the lower wall of the plenum and a predetermined pattern of holes is defined in the pick-up surface of the transfer belt (98, 150) with the matching effective area of openings in the plenum and holes in the belt higher at the first station than over the remaining reach of the belt and such that the vacuum drawing means draws the maximum vacuum in the plenum of which it is capable when all the openings of the plenum are uncovered and which vacuum is just sufficient to pick-up only properly orientated ones of the said articles (16; 166) at the first station (168).

2. Apparatus according to claim 1, characterized in that the holes (98) in the transfer belt have a substantially greater total open area than the total open area of the openings in the plenum (92, 94) so that the holes (98) in the transfer belt have no appreciable effect on the amount and velocity of air passing through to the plenum (80).

3. Apparatus according to claim 1, characterized in that the openings in the plenum lower wall (142) are a first set of parallel slots which extend from above the first station (168) to the second station (176), and in that the holes (150) in the transfer belt are arranged in parallel rows corresponding to and overlying at least some of the said slots (144), and a second set of shorter, parallel, pick-up slots (146) interleaved between the said first set of transfer slots (144) and extending from the upstream end a short distance along the plenum wall (142) towards the downstream end.

4. Apparatus according to claim 3, characterized by means for moving the transfer belt (148) at a second predetermined speed which is higher than the first predetermined speed whereby to space the articles longitudinally along the transfer belt (148) so that misaligned articles (156 or 166') cannot be picked-up and carried by adjacent properly orientated articles.

5. Apparatus according to any preceding claim, characterized in that the spacing between the first station (168) and the transfer belt (148) is such that the said flat end of an upright article (166) is positioned with respect to the pick-up surface of the transfer belt (148) so that air flow therebetween increases in velocity to reduce pressure between the flat end and the pick-up surface in accordance with the Bernoulli Principle and the Coanda Effect to assist in lifting the article off the first station (168) and on to the pick-up surface of the belt where it is held by the vacuum in the plenum.

6. Apparatus according to claim 1, characterized in that the said openings (150) in the transfer belt are such, in relation to the power of the vacuum drawing means, that, in use, the flow of air in the space

7

between three mutually touching articles in the form of cylindrical containers, one of which is inverted, is of insufficient velocity to create a reduced pressure area in the space therebetween to draw the inverted container against the other two and hold it by the plenum vacuum alone against the transfer belt (148).

7. Apparatus according to claim 1 characterized in that the higher matching area of the openings in the belt and the holes in the plenum is provided by larger size openings (94) in the plenum at and adjacent the first station.

8. Apparatus according to claim 7, characterized by a longitudinal rib (104, Fig. 5) on the inside surface of the transfer belt (96) adjacent each side edge thereof; and a longitudinal groove (106) on the outer surface of the plenum wall (90) adjacent each side edge thereof for receiving the respective ribs (104) to form an air seal between the said edge of the transfer belt and the plenum wall.

9. Apparatus according to claim 1 or claim 8, characterized in that rows of spaced said openings (98) in the plenum (90) overlie every alternate one of the said rows of holes (94) in the transfer belt (96).

10. Apparatus according to claim 9, characterized in that the transfer belt (96) has first and second ends, the apparatus comprising splicing means (112) extending laterally across the transfer belt to join the first and second ends together to form an endless belt, the splicing means having a lateral opening through which air is drawn into the vacuum plenum when the splicing means is over the said holes (94, 94') in order to assist the retention of articles at the join of the belt.

11. Apparatus according to claim 2, characterized in that the said holes in the transfer belt are elongate slots (98) and can each cover more than one opening in the plenum.

12. Apparatus according to claim 1, for the transport of vertically-arranged cylindrical articles in a wide mass at an upstream station (168, Fig. 14) into a lesser width at a downstream station (184), characterized in that the first mentioned station is a conveyor station (168) supplying articles in bulk at a predetermined speed; and the second mentioned station is a conveyor station (176) having side walls (180) converging in the downstream direction for merging the articles into said lesser width; and characterized by means for moving the transfer belt (148) at a higher speed than the movement of articles to the first station whereby to space longitudinally the articles at the second station (184) to facilitate the merger of the articles upon engagement with the said converging side walls (180).

13. A method of transferring upright flat-ended articles from a first station (168) to a second station (176) spaced from the first station, comprising moving a foraminous transfer belt (148) from a position spaced above the first station (168) a distance slightly greater than the height of the upright articles (166), to the second station and, with a vacuum plenum (80, 132) drawing a vacuum over the transfer belt (90, 148), thereby picking-up on to a pick-up surface of the belt, articles from the first station and conveying them to the second station, characterized in that a predetermined pattern of openings (92, 94; 144, 146) is defined in a lower wall (90, 142) of the vacuum plenum (80, 132) and a predetermined pattern of holes (98; 150) is defined in the transfer belt (90, 148) such that at and adjacent the first station the matching openings of the plenum and holes of the belt define a larger effective area than over the remaining reach of the belt passing over the lower wall of the plenum such that the vacuum drawn is the maximum vacuum which the plenum is capable of producing when all the said openings are uncovered, and which vacuum is just sufficient to pick-up only properly orientated articles at the first station (168).

14. A method according to claim 13, comprising conveying a wide mass of articles from the first station (168) to a lesser width at the second station (176), the method being characterized by the steps of: picking-up articles on to the transfer belt (148) at the first station (168); longitudinally separating the articles (166) as they are picked-up at the first station; conveying the articles to the second station (176); depositing the articles at the second station in longitudinally separated condition; moving the articles away from the second station; and laterally converging the articles into single file as they move away from the second station.

## Patentansprüche

1. Vakuum-Überführungsförderer zum Überführen allein solcher ebenendiger Gegenstände (16), welche eine vorbestimmte, erwünschte Ausrichtung haben, von einer ersten Station (168) zu einer von der ersten Station beabstandeten zweiten Station (176), umfassend: ein gelochtes Überführungsband (90, 148) mit einem Trum, welches sich von der ersten Station (168) zu einer zweiten Station (176) erstreckt und für die Überführung von mit einem ebenen Ende aufwärts gewandten Gegenständen von der ersten Station zur zweiten Station bewegbar ist, und mit einer äußeren Aufnahmefläche, welche in einem Abstand oberhalb der ersten Station (168) angeordnet ist, welcher gerade etwas größer ist als die Höhe der aufrecht stehenden Gegenstände (16, 166); eine Unterdruckkammer (80, 132) mit einer sich entlang einer Innenfläche des Überführungsbands (90, 148) erstreckenden Wand; und Einrichtungen zum Erzeugen eines Vakuums in der Kammer, dadurch gekennzeichnet, daß in der unteren Wand der Kammer ein vorbestimmtes Muster von Öffnungen (92, 94; 144, 146) und in der Aufnahmefläche des Überführungsbands (98, 150) ein vorbestimmtes Muster von Löchern ausgebildet ist, wobei die übereinstimmende Fläche der Öffnungen in der Kammer und der Löcher im Band an der ersten Station größer ist als entlang dem verbleibenden Trum des Bands, so daß die Einrichtungen zum Erzeugen des Vakuums das stärkste Vakuum, zu welchem sie fähig sind, in der Kammer erzeugen, wenn alle Öffnungen

**0 132 150**

der Kammer unbedeckt sind, wobei dieses Vakuum gerade ausreichend ist, allein richtig Ausgerichtete von den Gegenständen (16; 166) an der ersten Station (168) aufzunehmen.

2. Vorrichtung nach Anspruch 1, dadurch gekennzeichnet, daß die Löcher (98) im Überführungsband eine wesentlich größere Gesamt-Öffnungsfläche haben als die Gesamt-Öffnungsfläche der Öffnungen in der Kammer (92, 94) beträgt, so daß die Löcher (98) im Überführungsband keine nennenswerte Wirkung auf die Menge und Geschwindigkeit von in die Kammer (80) hindurchströmender Luft haben.

3. Vorrichtung nach Anspruch 1, dadurch gekennzeichnet, daß die Öffnungen in der unteren Wand (142) der Kammer eine erste Anordnung von parallelen Schlitzen umfassen, welche sich von oberhalb der ersten Station (168) zur zweiten Station (176) erstrecken, und daß die Löcher (150) im Überführungsband in parallelen Reihen angeordnet sind, welche wenigstens einigen dieser Schlitze (144) entsprechen und sie überdecken, wobei eine zweite Anordnung von kürzeren, parallelen Aufnahmeschlitzen (146) zwischen den Schlitzen (144) der ersten Anordnung angeordnet ist und sich vom zulaufseitigen Ende über eine kurze Strecke entlang der Kammerwand (142) zum ablaufseitigen Ende hin erstreckt.

4. Vorrichtung nach Anspruch 3, gekennzeichnet durch Einrichtungen zum Bewegen des Überführungsbands (148) mit einer zweiten vorbestimmten Geschwindigkeit, welche größer ist als die erste vorbestimmte Geschwindigkeit, um damit die Gegenstände in Längsabständen entlang dem Überführungsband (148) anzuordnen, so daß falsch ausgerichtete Gegenstände (156 oder 166') nicht von benachbarten, richtig ausgerichteten Gegenständen aufgenommen und mitgenommen werden können.

5. Vorrichtung nach einem der vorstehenden Ansprüche, dadurch gekennzeichnet, daß der Abstand zwischen der ersten Station (168) und dem Überführungsband (148) so gewählt ist, daß das ebene Ende eines aufrecht stehenden Gegenstands (166) in bezug auf die Aufnahmefläche des Überführungsbands (148) derart angeordnet ist, daß die Geschwindigkeit des Luftstroms dazwischen zunimmt, um den Druck zwischen dem ebenen Ende und der Aufnahmefläche entsprechend dem Bernoullischen Gesetz und dem Coanda-Effekt zu verringern, um das Abheben des Gegenstands von der ersten Station (168) in Anlage an die Aufnahmefläche des Bands zu unterstützen, an welcher er durch das Vakuum in der Kammer festgehalten wird.

6. Vorrichtung nach Anspruch 1, dadurch gekennzeichnet, daß die Öffnungen (150) im Überführungsband in Beziehung zur Leistung der Vakuumerzeugereinrichtung so ausgebildet sind, daß die Strömung der Luft zwischen drei sich gegenseitig berührenden Gegenständen in From von zylindrischen Behältern, von denen einer verdreht ist, im Betrieb eine nicht ausreichende Geschwindigkeit hat, um in dem Raum dazwischen einen Unterdruck zu erzeugen, welcher ausreicht den verdrehten Behälter an die beiden anderen heranzuziehen und ihn durch den Unterdruck der Kammer allein am Überführungsband (148) zu halten.

7. Vorrichtung nach Anspruch 1, dadurch gekennzeichnet, daß die größere übereinstimmende Fläche der Öffnungen des Bands und der Löcher in der Kammer durch Vergrößerung der Öffnungen (94) der Kammer an und zunächst der ersten Station bewirkt ist.

8. Vorrichtung nach Anspruch 7, gekennzeichnet durch eine Längsrippe (104, Fig. 5) an der Innenfläche des Überführungsbands (96) zunächst jedem Seitenrand desselben; und durch eine Längsnut (106) an der Außenfläche der Wand (90) der Kammer zunächst jedem Seitenrand derselben für die Aufnahme der jeweiligen Rippen (104) zur Bildung eines Luftabschlusses zwischen dem betreffenden Rand des Überführungsbands und der Wand der Kammer.

9. Vorrichtung nach Anspruch 1 oder Anspruch 8, dadurch gekennzeichnet, daß Reihen von gegenseitig beabstandeten Öffnungen (98) in der Kammer (90) sich mit jeder zweiten Reihe von Löchern (94) in dem Überführungsband (96) überdecken.

10. Vorrichtung nach Anspruch 9, dadurch gekennzeichnet, daß das Überführungsband (96) ein erstes und ein zweites Ende hat, daß die Vorrichtung eine Verbindereinrichtung (112) aufweist, welche sich quer über das Überführungsband erstreckt, um das erste mit dem zweiten Ende zu verbinden und damit ein endloses Band zu bilden, wobei die Verbindereinrichtung eine seitliche Öffnung hat, durch welche hindurch Luft in die Vakuumkammer gesaugt wird, wenn sich die Verbindereinrichtung über den Löchern (94, 94') befindet, um das Festhalten von Gegenständen an der Verbindungsstelle des Bands zu begünstigen.

11. Vorrichtung nach Anspruch 2, dadurch gekennzeichnet, daß die Löcher im Überführungsband längliche Schlitze (98) sind, welche sich über jeweils mehr als eine Öffnung in der Kammer hinweg erstrecken können.

12. Vorrichtung nach Anspruch 1, für den Transport von senkrecht angeordneten zylindrischen Gegenständen von einer zulaufseitigen Station (168, Fig. 14), an welcher sie in einer breiten Masse anstehen, zu einer ablaufseitigen Station (184) in einer verringerten Breite, dadurch gekennzeichnet, daß die erstgenannte Station eine Zuförderstation (168) für die Massenzulieferung von Gegenständen mit einer vorbestimmten Geschwindigkeit ist, und daß die zweitgenannte Station eine Förderstation (176) ist, mit in Ablaufrichtung konvergierenden Seitenwänden (180) zum Zusammenführen der Gegenstände auf die Verringerte Breite, und gekennzeichnet durch Einrichtungen zum Bewegen des Überführungsbands (148) mit einer Geschwindigkeit, welche größer ist als die Zuliefergeschwindigkeit der Gegenstände zur ersten Station, um die Gegenstände dadurch an der zweiten Station in Längsrichtung zu beabstanden und das Zusammenführen der Gegenstände beim Anlaufen der konvergierenden Seitenwände (180) zu erleichtern.

13. Verfahren zum Überführen von aufrecht stehenden, ebenendigen Gegenständen von einer ersten

9

Station (168) zu einer von der ersten Station beabstandeten zweiten Station (176), bei welchem ein gelochtes Überführungsband (148) von einer Stelle, deren Abstand über der ersten Station (168) etwas größer ist als die Höhe der aufrecht stehenden Gegenstände (166), zur zweiten Station bewegt wird und mittels einer Vakuumkammer (80, 132) ein Vakuum über dem Überführungsband (90, 148) erzeugt wird, um dadurch Gegenstände von der ersten Station an eine Aufnahmefläche des Bands zu heben und sie zur zweiten Station zu überführen, dadurch gekennzeichnet, daß ein vorbestimmtes Muster von Öffnungen (92, 94; 144, 146) in einer unteren Wand (90, 142) der Vakuumkammer (80, 132) und ein vorbestimmtes Muster von Löchern (98; 150) im Überführungsband (90, 148) ausgebildet ist, so daß die einander überliegeneden Öffnungen der Kammer und Löcher des Bands an und zunächst der ersten Station eine größere effektive Fläche aufweisen als entlang dem an der unteren Wand der Kammer entlang verlaufenden verbleibenden Trum des Bands, so daß in der Vakuumkammer das größtmögliche Vakuum erzeugbar ist, wenn alle Öffnungen unbedeckt sind, wobei dieses Vakuum gerade ausreicht, allein richtig ausgerichtete Gegenstände an der ersten Station (168) aufzunehmen.

14. Verfahren nach Anspruch 13, bei welchem in einer breiten Masse anstehende Gegenstände von der ersten Station (168) in einer verringerten Breite zur zweiten Station (176) überführt werden, wobei das Verfahren durch die folgenden Schritte gekennzeichnet ist: Aufnahmen der Gegenstände durch das Überführungsband (148) an der ersten Station (168); Trennen der Gegenstände in Längsrichtung voneinander bei ihrere Aufnahme an der ersten Station; Beförderung der Gegenstände (166) zur zweiten Station (176); Absetzen der Gegenstände in gegenseitigen Längsabständen an der zweiten Station; Abfördern der Gegenstände von der zweiten Station; und seitliches Zusammenführen der Gegenstände in eine einzige Reihe beim Abfördern derselben von der zweiten Station.

## Revendications

1. Appareil transporteur de transfer à vide, destiné à transférer seulement des objets à extrémité plane (16) qui ont une orientation prédéterminée désirée, depuis un premier poste (168) vers un second poste (176) espacé du premier, cet appareil comprenant: une courroie de transfer perforée (90, 148) dont une volée s'étend depuis le premier poste (168) vers le second poste (176) et est mobile pour transférer les objets dont l'extrémité plane se trouve à la partie supérieure depuis le premier poste vers le second, la courroie transporteuse comportant une surface de ramassage extériure, se situant au-dessus et à l'écart du premier poste (168) suivant une distance qui n'est que légèrement supérieure à la hauteur des objets redressés (16, 166); une chambre à vide (80, 132) comportant une paroi s'étendant le long d'une surface interne de la courroie de transfer (90, 148); et des moyens pour créer un vide dans la chambre, caractérisé en ce qu'un dessin prédéterminé d'ouvertures (92, 94; 144, 146) est créé dans la paroi inférieure de la chambre et un dessin prédéterminé de trous est créé dans la surface de ramassage de la courroie de transfer (98, 150), l'aire efficace correspondante des ouvertures prévues dans la chambre et des trous prévus dans la courroie étant plus élevée à l'endroit du premier poste que sur le reste de la volée de la courroie, de sorte que les moyens imposant un vide créent, dans la chambre, le maximum de vide dont ils sont capables lorsque toutes les ouvertures de la chambre sont découvertes, ce vide étant tout juste suffisant pour ne ramasser que des objets convenablement orientés parmi les objets susdits (16, 166) au premier poste (168).

2. Appareil suivant la revendication 1, caractérisé en ce que les trous (98) de la courroie de transfert ont une aire ouverte total sensiblement plus élevée que l'aire ouverte totale des ouvertures de la chambre (92, 94), de sorte que les trous (98) de la courroie de transfert n'ont pas d'effet appréciable sur la quantité et la vitesse de l'air traversant la chambre (80).

3. Appareil suivant la revendication 1, caractérisé en ce que les ouvertures de la paroi inférieure (142) de la chambre comprennent une première série de fentes parallèles s'étendant depuis un endroit situé au-dessus du premier poste (168) vers le second poste (176), et en ce que les trous (150) de la courroie de transfert sont agencés en rangées parallèles correspondant à et surplombant au moins certaines des fentes susidtes (144), ainsi qu'une seconde série de fentes de ramassage parallèles, plus courtes (146) intercalées entre les fentes de la première série de fentes de transfer (144) et s'étendant depuis l'extrémité amont sur une courte distance le long de la paroi (142) de la chambre vers l'extrémité aval.

4. Appareil suivant la revendication 3, caractérisé en ce qu'il comprend des moyens pour déplacer la courroie de transfert (148) à une seconde vitesse prédéterminée, qui est supérieure à la première vitesse prédéterminée, de manière à espacer les objets en direction longitudinale le long de la courroie de transfer (148), de sorte que des objets mal alignés (156 ou 166') ne puissent pas être ramassés et emportés par des objets bien orientés, adjacents.

5. Appareil suivant l'une quelconque des revendications précédentes, caractérisé en ce que l'espacement entre le premier poste (168) et la courroie de transfer (148) est tel que l'extrémité plane susdite d'un objet redressé (166) est disposée par rapport à la surface de ramassage de la courroie de transfer (148) de manière que le débit d'air passant entre elles augmente de vitesse pour réduire la pression entre cette extrémité plane et cette surface de ramassage suivant le principe de Bernoulli et l'effet Coanda, pour aider au soulèvement des objets depuis le premier poste (168) vers la surface de ramassage de la courroie, où ces objets sont retenus grâce au vide existant dans la chambre.

6. Appareil suivant la revendication 1, caractérisé en ce que les ouvertures susdites (150) de la courroie de transfert sont telles, en relation avec la puissance des moyens de création de vide, que, lors de l'utilisation, le débit d'air dans l'espace compris entre trois objets se touchant mutuellement, qui sont sous la forme de récipients cylindriques, dont l'un est inversé, est d'une vitesse insuffisante pour créer une aire de pression réduite dans l'espace susdit au point d'attirer le récipient renversé contre les deux autres récipients et de la maintenir seulement sous l'effet du vide de la chambre, contre la courroie de transfer (148).

7. Appareil suivant la revendication 1, caractérisé en ce que l'aire correspondante supérieure des ouvertures de la courroie et des trous de la chambre est obtenue en prévoyant des ouvertures de plus grandes dimensions (94) dans la chambre au premier poste ou au voisinage de celui-ci.

8. Appareil suivant la revendication 7, caractérisé en ce qu'il comprend une nervure longitudinale (104, Figure 5) prévue sur la surface interne de la courroie de transfert (96) au voisinage de chaque bord latéral de cette courroie, et une rainure longitudinale (106) prévue dans la surface externe de la paroi (90) de la chambre, au voisinage de chaque bord latéral de celle-ci, ces rainures étant destinées à recevoir les nervures correspondantes (104) pour créer un joint étanche à l'aire entre le bord susdit de la courroie de transfer et la paroi de la chambre.

9. Appareil suivant la revendication 1 ou la revendication 8, caractérisé en ce que des rangées d'ouvertures espacées susdites (98) prévues dans la paroi (90) de la chambre surplombent chaque rangée alternée des rangées susdites de trous (94) de la courroie de transfert (96).

10. Appareil suivant la revendication 9, caractérisé en ce que la courroie de transfert (96) présente une première et une seconde extrémité, cet appareil comportant des moyens de jonction (112) s'étendant latéralement en travers de cette courroie de transfert pour réunir la première et la seconde extrémité en vue de former une courroie sans fin, les moyens de jonction comportant une ouverture latérale à travers laquelle de l'air est aspiré dans la chambre à vide lorsque les moyens de jonction se trouvent par-dessus les trous susdits (94, 94'), pour aider à la rétention des objets à l'endroit de la jonction de la courroie.

11. Appareil suivant la revendication 2, caractérisé en ce que les trous susdits de la courroie de transfert sont constitués par de longues fentes (98) et peuvent chacun recouvrir plus d'une ouverture de la chambre.

12. Appareil suivant la revendication 1, destiné au transport d'objets cylindriques agencés verticalement, se présentant sous la forme d'une masse large à un poste amont (168, Figure 14) pour les amener à une masse de largeur moindre à un poste aval (184), caractérisé en ce que le premier poste mentionné est un poste à transporteur (168) fournissant les objets en masse à une vitesse prédéterminée, et le second poste mentionné est un poste à transporteur (176) comportant des parois latérales (180) convergeant dans la direction aval pour resserrer les objets afin qu'ils prennent la largeur moindre susdite, cet appareil étant caractérisé en ce qu'il comporte des moyens pour déplacer la courroie de transfert (148) à une vitesse plus élevée que celle du déplacement des objets vers le premier poste, de manière à espacer ainsi les objets dans la direction longitudinale au second poste (184) pour faciliter le resserrement des objets lorsqu'ils entrent en contact avec les parois latérales convergentes susdites (180).

13. Procédé de transfert d'objets à extrémité plane, se trouvant en position debout, depuis un premier poste (168) vers un second poste (176) espacé du premier, comprenant le déplacement d'une courroie de transfert perforée (148) depuis une position se situant à l'écart et au-dessus du premier poste (168) suivant une distance légèrement supérieure à la hauteur des objets debout (166), vers un second poste, et, grâce à une chambre à vide (80, 132), l'application d'un vide à la courroie de transfert (90, 148) pour ramasser ainsi sur une surface de ramassage de la courroie, des objets venant du premier poste et pour déplacer ceux-ci vers le second poste, caractérisé en ce qu'un dessin prédéterminé d'ouvertures (92, 94; 144, 146) et créé dans une paroi inférieure (90, 142) de la chambre à vide (80, 132) et un dessin prédéterminé de trous (98; 150) est créé dans la courroie de transfert (90, 148), de sorte qu'au premier poste et au voisinage de celui-ci, les ouvertures de la chambre et les trous de la courroie, qui correspondent, définissent une aire efficace plus grande que sur le reste de la volée de la courroie passant sur la paroi inférieure de la chambre, de sorte que le vide créé est le vide maximum que la chambre est capable de produire lorsque toutes les ouvertures susdites sont découvertes, ce vide étant tout juste suffisant pour ne ramasser que des objets convenablement orientés au premier poste (168).

14. Procédé suivant la revendication 13, comprenant le transfert d'une masse importante d'objets depuis le premier poste (168) pour les amener à une largeur moindre au second poste (176), caractérisé par les opérations suivantes: le ramassage des objets sur la courroie de transfert (148) au premier poste (168); la séparation des objets (166) dans la direction longitudinale au fur et à mesure qu'ils sont ramassés au premier poste; le transfert des objets vers le second poste (176); le dépôt des objets au second poste dans un état de séparation longitudinale; le déplacement des objets à l'écart de ce second poste; et le resserrement latéral des objets pour ne former qu'une seule file au fur et à mesure qu'ils sont déplacés à l'écart du second poste.

Fig. 1
(PRIOR ART)

**Fig-2**

**Fig-3**

**Fig-4**

Fig - 5

Fig - 6

Fig. 7

Fig. 8

Fig. 9

Fig. 10

Fig-11

0 132 150